(19) **Europäisches Patentamt / European Patent Office / Office européen des brevets**

(11) **EP 1 288 685 B1**

(12) **FASCICULE DE BREVET EUROPEEN**

(45) Date de publication et mention
de la délivrance du brevet:
**05.03.2014 Bulletin 2014/10**

(51) Int Cl.:
*G02B 6/028* (2006.01)     *G02B 6/036* (2006.01)
*G02B 6/293* (2006.01)

(21) Numéro de dépôt: **02291947.6**

(22) Date de dépôt: **01.08.2002**

(54) **Fibre optique pour un système de transmission à multiplexage en longueurs d'onde**

Optische Faser für ein Wellenlängenmultiplexübertragungssystem

Optical fibre for a wavelength division multiplexing transmission system

(84) Etats contractants désignés:
**AT BE BG CH CY CZ DE DK EE ES FI FR GB GR IE IT LI LU MC NL PT SE SK TR**

(30) Priorité: **27.08.2001 FR 0111130**

(43) Date de publication de la demande:
**05.03.2003 Bulletin 2003/10**

(60) Demande divisionnaire:
**08017590.4**

(73) Titulaire: **Draka Comteq B.V.**
**1083 HJ Amsterdam (NL)**

(72) Inventeurs:
• **Sillard, Pierre**
 **78150 Le Chesnay (FR)**
• **Beaumont, Florent**
 **78700 Conflans Ste Honorine (FR)**
• **Fleury, Ludovic**
 **78390 Bois d'Arcy (FR)**
• **Gorlier, Maxime**
 **75017 Paris (FR)**
• **de Montmorillon, Louis-Anne**
 **75017 Paris (FR)**
• **Nouchi, Pascale**
 **78600 Maisons-Lafitte (FR)**

(74) Mandataire: **Algemeen Octrooi- en Merkenbureau B.V.**
**P.O. Box 645**
**5600 AP Eindhoven (NL)**

(56) Documents cités:
**EP-A- 0 554 714     EP-A- 0 959 374**
**EP-A- 1 030 199     EP-A- 1 081 514**
**WO-A-99/42869     FR-A- 2 815 418**
**US-A- 5 659 649     US-A- 5 781 673**
**US-B1- 6 263 138**

• **PATENT ABSTRACTS OF JAPAN vol. 1999, no. 08, 30 juin 1999 (1999-06-30) & JP 11 084159 A (FURUKAWA ELECTRIC CO LTD:THE), 26 mars 1999 (1999-03-26)**
• **YOUWEI LI ET AL: "TRIPLE-CLAD SINGLE-MODE FIBERS FOR DISPERSION FLATTENING" OPTICAL ENGINEERING, SOC. OF PHOTO-OPTICAL INSTRUMENTATION ENGINEERS. BELLINGHAM, US, vol. 33, no. 12, 1 décembre 1994 (1994-12-01), pages 3999-4005, XP000484832 ISSN: 0091-3286**

**Description**

La présente invention concerne le domaine des transmissions par fibre optique, et plus spécifiquement, les systèmes de transmission à multiplexage en longueurs d'onde.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en 'échelon", en trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40 Gbit/s ou à 160 Gbit/s ; l'objectif est d'obtenir, pour toutes les valeurs de longueurs d'onde du multiplex, une dispersion chromatique cumulée sensiblement nulle sur la liaison, de sorte à limiter l'élargissement des impulsions. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique sur la plage du multiplex ; des faibles valeurs de pente limitent les distorsions entre les canaux du multiplex et facilitent la compensation de la dispersion sur l'ensemble du multiplex. Cette pente est classiquement la dérivée de la dispersion chromatique par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber"). La demanderesse commercialise ainsi sous référence ASMF 200 une fibre monomode à saut d'indice présentant une dispersion chromatique de l'ordre de 17 ps/(nm.km) à 1550 nm. La pente de dispersion chromatique à 1550 nm est de l'ordre de 0,06 ps/(nm$^2$.km).

Sont aussi apparues sur le marché des fibres à dispersion décalée, ou DSF (acronyme de l'anglais 'Dispersion shifted fibers"). On qualifie de NZ-DSF+ (acronyme de l'anglais "non-zero dispersion shifted fibers") des fibres à dispersion décalée, présentant une dispersion chromatique non nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1 ps/(nm$^2$.km).

FR-A2 790 107 (EP-A-1030199) propose une fibre de ligne, tout particulièrement adaptée à une transmission à multiplexage en longueurs d'onde dense, avec un espacement entre les canaux de 100 GHz ou moins pour un débit par canal de 10 Gbit/s ou plus ; cette fibre présente pour une longueur d'onde de 1550 nm une surface effective supérieure ou égale à 60 $\mu$m$^2$, une dispersion chromatique comprise entre 6 et 10 ps/(nm.km), et une pente de dispersion chromatique inférieure à 0,07 ps/(nm$^2$.km). A cette longueur d'onde, les pertes par courbure sont de l'ordre de 10 dB/m, pour un enroulement de la fibre autour d'un manchon de rayon 10 mm. A une longueur d'onde de 1625 nm, les pertes par courbure atteignent des voleurs de 50 dB/m.

La demande de brevet français n° 0002316 déposée le 24/02/2000 (voir EP-A-1128196) et intitulée "Fibre optique monomode en câble pour réseaux de transmission à fibre optique à multiplexage en longueurs d'onde" propose une fibre de ligne présentant à 1550 nm une dispersion chromatique entre 5 et 11 ps/(nm.km), une pente de dispersion chromatique comprise entre 0,01 et 0,04 ps/(nm$^2$.km) et des pertes par courbures mesurées par enroulement autour d'un manchon de rayon 10 mm de l'ordre de 10 dB/m. A une longueur d'onde de 1625 nm, les pertes par courbure atteignent des valeurs de 50 dB/m.

EP-A-1018656 propose des fibres optiques monomode à dispersion décalée, présentant dans une plage de longueur d'onde de 1400 à 1650 nm, un maximum de la dispersion chromatique et une pente de dispersion chromatique en valeur absolue inférieure à 0,05 ps/(nm$^2$.km).

EP-A-1081514 propose une fibre optique adaptée à la compensation en ligne de la dispersion chromatique dans une fibre à dispersion décalée. Cette fibre présente pour une longueur d'onde de 1550 nm une dispersion chromatique négative et supérieure à -40 ps/(nm.km), un rapport entre la dispersion chromatique et la pente de dispersion chromatique entre 50 et 230 nm, une surface effective supérieure ou égale à 10 $\mu$m$^2$, des pertes par courbure inférieures ou égales à 0,05 dB et une longueur d'onde de coupure théorique supérieure ou égale à 1100 nm.

Par rapport à ces différentes fibres NZ-DSF+, l'invention propose une fibre, qui présente une pente de dispersion chromatique réduite (presque nulle), et donc une dispersion chromatique à peu près constante sur une plage plus large de longueurs d'onde, ce qui limite les distorsions entre canaux. La fibre peut donc être utilisée dans un système de transmission à multiplexage en longueurs d'onde, avec un plus grand nombre de canaux.

Plus précisément, l'invention propose une fibre optique monomode en câble telle que définie dans la revendication 1.

La fibre peut avantageusement présenter une ou plusieurs des caractéristiques optiques suivantes

- à une longueur d'onde de 1550 nm une surface effective supérieure ou égale à 40 $\mu$m$^2$;
- une longueur d'onde $\lambda_0$ d'annulation de la dispersion chromatique inférieure ou égale à 1400 nm;
- à une longueur d'onde de 1550 nm un diamètre de mode 2W$_{02}$ supérieur ou égal à 6,4 $\mu$m;
- à une longueur d'onde de 1550 nm, des pertes par courbure mesurées pour un rayon de 10 mm inférieures à 100 dB/m;
- à une longueur d'onde de 1675 nm des pertes par courbure mesurées pour un rayon de 10 mm inférieures à 400 dB/m;
- à une longueur d'onde de 1550 nm, des pertes par courbure mesurées pour 100 tours de fibre autour d'un manchon de rayon de 30 mm inférieures à 10$^{-2}$ dB;
- à une longueur d'onde de 1625 nm, des pertes par courbure mesurées pour 100 tours de fibre autour d'un manchon de rayon de 30 mm inférieures à 0,1 dB ;
- à une longueur d'onde de 1675 nm, des pertes par courbure mesurées pour 100 tours de fibre autour d'un manchon de rayon de 30 mm inférieures à 0,5 dB ;
- une longueur d'onde de coupure théorique inférieure ou égale à 1850nm, et de préférence inférieure ou égale à 1800 nm;
- une variation de dispersion chromatique entre 1460 nm et 1625 nm, par rapport à sa valeur à 1550 nm, inférieure ou égale en valeur absolue à 35 %, et de préférence inférieure ou égale à 25 %, voire inférieure ou égale à 20 %;
- une variation de dispersion chromatique entre 1460 et 1675 nm, par rapport à sa voleur à 1550 nm, inférieure ou égale en valeur absolue à 40 %, et de préférence inférieure ou égale à 35 %, voire inférieure ou égale à 25 %;
- une variation de dispersion chromatique entre 1460 et 1625 nm, par rapport à sa valeur à 1550 nm, inférieure ou égale en valeur absolue à 2 ps/(nm.km), et de préférence inférieure ou égale à 1 ps/(nm.km);
- une variation de dispersion chromatique entre 1460 et 1675 nm, par rapport à sa voleur à 1550 nm, inférieure ou égale en valeur absolue à 3 ps/(nm.km), et de préférence inférieure ou égale à 2 ps/(nm.km);
- à une longueur d'onde de 1550 nm, une dispersion chromatique C comprise entre 5 et 11 ps/(nm.km);
- à une longueur d'onde de 1550 nm, une pente de dispersion chromatique C' inférieure ou égale en valeur absolue à 0,012 ps/(nm$^2$.km), et de préférence inférieure à 0,010 ps/(nm$^2$.km);
- à une longueur d'onde de 1550 nm, un produit entre la surface effective et le rapport entre la dispersion chromatique et la pente de la dispersion chromatique supérieure en valeur absolue à 12000 $\mu$m$^2$.nm;
- à une longueur d'onde de 1550 nm une sensibilité aux microcourbures inférieure ou égale à 1, et de préférence inférieure ou égale à 0,8;
- à une longueur d'onde de 1550 nm une atténuation inférieure ou égale à 0,24 dB/km;
- à une longueur d'onde de 1550 nm une dispersion modale de polarisation inférieure ou égale à 0,2 ps/km$^{1/2}$, et de préférence inférieure ou égale à 0,1 ps/km$^{1/2}$, voire inférieure ou égale à 0,05 ps/km$^{1/2}$.

Les caractéristiques du profil de la fibre peuvent avantageusement être choisies parmi les suivantes :

- le rapport entre le rayon intérieur et le rayon extérieur du trapèze est compris entre 0,55 et 1;
- l'intégrale de l'indice entre un rayon nul et le rayon ($r_1$) extérieur de la partie centrale de la fibre présentant un indice supérieur à celui de la gaine est supérieure à 23.10$^{-3}$ $\mu$m;
- le double de l'intégrale du produit de l'indice par le rayon, entre un rayon nul et le rayon ($r_1$) extérieur de la partie centrale de la fibre présentant un indice supérieur à celui de la gaine est compris entre 65.10$^{-3}$ et 90.10$^{-3}$ $\mu$m$^2$;
- le triple de l'intégrale du produit de l'indice par le carré du rayon, entre un rayon nul et le rayon ($r_1$) extérieur de la partie centrale de la fibre présentant un indice supérieur à celui de la gaine est compris entre 180.10$^{-3}$ et 305.10$^{-3}$ $\mu$m$^3$;
- l'intégrale de l'indice entre le rayon intérieur ($r_2$) et le rayon extérieur ($r_3$) de l'anneau est compris entre 4.10$^{-3}$ et 12.10$^{-3}$ $\mu$m;

L'invention propose encore un système de transmission à multiplexage en longueurs d'onde, comprenant une telle fibre comme fibre de ligne.

Il est avantageux que le système comprenne en outre comme fibre de ligne une fibre présentant pour une longueur d'onde de 1550 nm une dispersion chromatique positive et non nulle et un rapport de la dispersion chromatique à la pente de dispersion chromatique compris entre 50 et 400 nm. Dans ce cas, la longueur de la fibre de invention est de préférence supérieure ou égale à la longueur de la fibre présentant un rapport de la dispersion chromatique à la pente de dispersion chromatique entre 50 et 400 nm.

On peut encore prévoir une fibre de compensation de dispersion, présentant pour une longueur d'onde de 1550 nm un rapport de la dispersion chromatique à la pente de dispersion chromatique supérieur ou égal à 250 nm.

Avantageusement, le système de transmission présente une plage d'utilisation comprise entre les longueurs d'onde 1460 et 1625nm, et de préférence entre les longueurs d'onde 1460 et 1675nm, voire entre les longueurs d'onde 1300 et 1700nm.

D'autres caractéristiques et avantages de invention apparaîtront à la lecture de la description qui suit de modes de réalisation de l'invention, donnés à titre d'exemple et en référence aux dessins annexés, qui montrent

- figure 1, une représentation schématique d'un système de transmission;
- figure 2, une représentation schématique du profil d'indice de consigne de fibres selon l'invention;
- figure 3, un graphe de la dispersion chromatique en fonction de la longueur d'onde pour des fibres connues et des fibres selon l'invention;
- figure 4, une vue partielle et à plus grande échelle de la figure 3

L'invention propose une fibre monomode en câble, présentant, à une longueur d'onde de 1550 nm, une dispersion chromatique comprise entre 3 et 14 ps/(nm.km), et une pente de dispersion chromatique inférieure en valeur absolue à 0,014 ps/(nm$^2$.km). Elle présente aussi des pertes par courbure mesurées pour un rayon de 10 mm inférieures à 400 dB/m pour une longueur d'onde de 1625 nm; on notera de ce point de vue que les pertes par courbure sont une fonction croissante de la longueur d'onde et que la borne supérieure proposée revient à appliquer une borne sur toute la plage en dessous de 1625 nm. Les critères proposés permettent une utilisation de la fibre, dans un système de transmission à multiplexage en longueurs d'onde, sur une large bande de longueurs d'onde ; la fibre peut être câblée et utilisée de 1300 à 1700 nm. Dans toute la plage d'utilisation, la dispersion chromatique et la pente de dispersion chromatique présentent des valeurs acceptables.

Plus précisément, le fait que la fibre soit monomode en câble, dans une plage de longueurs d'onde de 1300 à 1700 nm, lui permet d'assurer une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique en câble peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les réseaux de transmission à fibre optique, les modes secondaires disparaissent du fait d'un affaiblissement trop important. La propagation dans le système de transmission est alors monomode. On pourrait donc aussi remplacer ce critère par un critère sur la longueur d'onde de coupure théorique qui pourrait être inférieure ou égale à 1850 nm, et de préférence inférieure ou égale à 1800 nm.

Le seuil inférieur proposé pour les valeurs proposées de la dispersion chromatique évite ou limite les effets non linéaires dans la fibre -mélange quatre ondes, modulation de phase croisée. Le seuil supérieur de la plage de valeurs de la dispersion chromatique permet de compenser la dispersion chromatique cumulée, sans que la longueur de la fibre de compensation ne soit trop importante. La faible valeur de pente de dispersion chromatique proposée permet d'une part à la fibre de n'être compensée qu'en dispersion, et non plus en dispersion et en pente, sur toute la plage de longueurs d'onde. De fait, la pente de dispersion chromatique est si faible qu'il est possible de ne pas compenser la pente de dispersion chromatique. En outre, cette faible valeur de pente de dispersion limite les distorsions induites entre les différents canaux du multiplex, comme indiqué plus haut.

Le seuil proposé pour les pertes par courbures assure une bonne capacité de la fibre à supporter le câblage, dans toute la plage de longueurs d'onde utilisée dans le système de transmission.

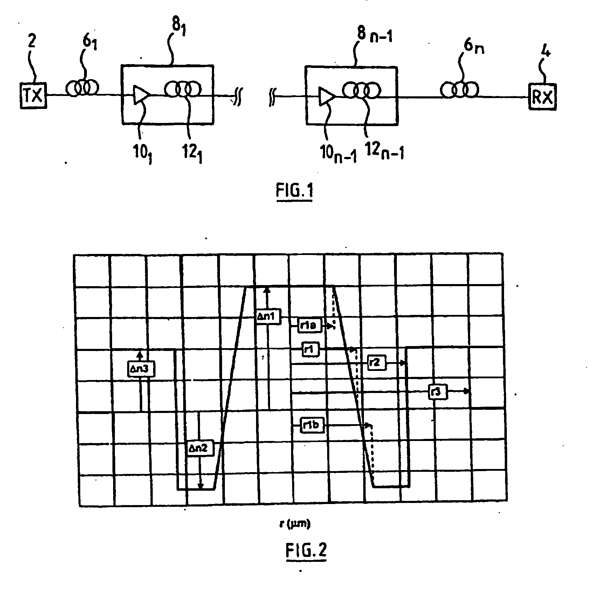

La figure 1 montre une représentation schématique d'un système de transmission à multiplexage en longueurs d'onde. On a représenté à la figure 1 l'émetteur TX 2 et le récepteur RX 4 du système de transmission, entre lesquels s'étend la fibre de ligne. La fibre de ligne est formée de tronçons $6_1$ à $6_n$, séparés par des répéteurs $8_1$ à $8_{n-1}$; chaque répéteur $8_i$ présente un amplificateur $10_i$, dont la structure est sans incidence sur le fonctionnement de l'invention, et n'est donc pas décrite. En sortie de l'amplificateur est prévue une section 12; de fibre de compensation de dispersion. Placer la fibre de compensation de dispersion en aval de l'amplificateur permet de limiter les effets d'une forte atténuation dans cette fibre. Des modifications au système de transmission de la figure 1 sont possibles : ainsi, peuvent être prévus des filtres, un amplificateur en aval de la fibre de compensation de dispersion, etc. On peut aussi disposer la fibre de compensation de dispersion dans les répéteurs. Dans un système du type de celui de la figure 1, la fibre de l'invention peut être utilisée comme fibre de ligne.

Dans le système de la figure 1, la fibre de l'invention peut être compensée en dispersion, sans qu'il soit nécessaire de compenser aussi la pente de la dispersion chromatique. Plus précisément, la valeur de la pente de dispersion chromatique est telle qu'il n'est plus nécessaire comme dans l'état de la technique de tenter de compenser à la fois la dispersion chromatique et la pente de dispersion chromatique. On peut en fait considérer que la dispersion chromatique est constante, et ne pas compenser la pente de dispersion chromatique.

Il est aussi possible d'utiliser comme fibre de ligne une combinaison de la fibre de l'invention et d'une fibre de l'état de la technique. Dans la mesure où la fibre de l'invention présente une dispersion chromatique sensiblement nulle, cette combinaison permet de faire varier le rapport C/C de la dispersion chromatique à la pente de dispersion chromatique pour la fibre de compensation de dispersion utilisée dans le système. On note $C_1$ et $C'_1$, la dispersion chromatique et la pente de dispersion chromatique de la fibre de l'invention, $C_2$ et $C'_2$ la dispersion chromatique et la pente de dispersion chromatique de la fibre de l'état de la technique. Soit un tronçon de fibre de ligne, formé d'une longueur $l_1$ de fibre de l'invention, et d'une longueur $l_2$ de fibre de l'état de la technique. Pour compenser la dispersion chromatique et la pente de dispersion chromatique du tronçon, on choisit une fibre de compensation de dispersion chromatique, qui présente un rapport C/C donné par

$$C/C' = (l_1.C_1 + l_2.C_2)/(l_1.C'_1 + l_2C_2) \sim (l_1.C_1 + l_2.C_2)/(l_2C_2),$$

puisque la fibre de l'invention présente une pente de dispersion chromatique $C'_1$ sensiblement nulle.

Il apparaît dairement de cette équation que la combinaison des fibres permet de faire varier le rapport C/C' de la fibre de compensation de dispersion, par rapport au rapport $C_2/C'^2$ de la fibre de l'état de la technique.

On donne maintenant un exemple d'une telle configuration. Dans cet exemple, on considère un tronçon d'une longueur de 100 km, avec des longueurs $l_1$ et $l_2$ de 50 km. La fibre de l'état de la technique est une fibre TeroLight décrite dans FR-A-2 790 107, présentant à 1550 nm une dispersion chromatique de 8 ps/(nm.km) et une pente de dispersion chromatique de 0,058 ps/(nm$^2$.km). Le rapport $C_2/C'_2$ pour cette fibre vaut 8/0,058, soit de l'ordre de 140 nm. La fibre de l'invention présente dans un premier cas, une dispersion chromatique de 8.2 ps/(nm.km) et une pente de dispersion chromatique de 0,0007 ps/(nm$^2$.km), et dans un second cas, une dispersion chromatique de 4.5 ps/(nm.km) et une pente de dispersion chromatique de 0,0048 ps/(nm$^2$.km). Dans le premier cas, la dispersion chromatique cumulée dans le tronçon est de l'ordre de 810 ps/nm et dans le second cas de l'ordre de 625 ps/nm. On pourra compenser ce tronçon non plus avec une fibre de compensation de rapport C/C de l'ordre de 140 nm, mais avec une fibre de compensation de rapport 810/2.935 ∼ 16.2/0,058 soit de l'ordre de 280 nm dans le premier cas, et de rapport de l'ordre de 200 nm dans le second cas. La fibre de compensation de dispersion chromatique avec un rapport C/C de 140 nm adaptée à la fibre TeraLight, ou de rapport C/C' de l'ordre de 200 nm, sont décrites dans FR-A-2 795 828. Une fibre de compensation de dispersion chromatique présentant un rapport C/C' de 280 nm est une fibre adaptée à la compensation de la dispersion chromatique d'une fibre SMF et peut se trouver dans le commerce. Les trois fibres de compensation présentent des valeurs de dispersion chromatique aussi faibles que possible, qui sont comparables. La combinaison d'une fibre de l'invention avec une fibre de l'état de la technique permet soit d'augmenter le rapport C/C' de la fibre de compensation adaptée à la compensation de la fibre de l'état de la technique, et donc de diminuer ses pertes par atténuation et d'augmenter sa surface effective, soit de diminuer sa longueur nécessaire, soit les deux, et donc dans tous les cas de diminuer les pertes par atténuation dans cette fibre.

Toujours dans le même exemple, un tronçon de 100 km de fibre TeraLight peut être compensé en dispersion par une longueur de fibre de compensation de dispersion de l'ordre de 8 km présentant des pertes par atténuation de l'ordre de 0,7 dB/km. En revanche, la combinaison de 50 km de fibre TeraLight avec de la fibre de l'invention peut être compensée en dispersion, dans le premier cas, par une longueur de fibre de compensation de l'ordre de 8,1 km mais qui présente des pertes par atténuation de l'ordre de 0,5 dB/km, et dans le second cas, par une longueur de fibre de compensation de l'ordre de 6,25 km et qui présente des pertes par atténuation de l'ordre de 0,6 dB/km. Les pertes par atténuation dans la fibre de compensation sont dans le cas de la TeraLight de 5,6 dB, et dans les autres de 4,05 dB et de 3,75 dB.

On peut bien entendu utiliser une autre fibre de l'état de la technique que celle de l'exemple. Il est intéressant que cette fibre soit une fibre NZ-DSF+, avec une dispersion chromatique voisine de la fibre de l'invention; ceci limite les variations de la dispersion chromatique lors du passage d'un fibre à l'autre et permet de conserver la valeur initiale et donc optimisée de la dispersion chromatique. La fibre NZ-DSF+ peut donc être caractérisée par une dispersion chromatique positive et non nulle à une longueur d'onde de 1550 nm, et par un rapport entre la dispersion chromatique et la pente de dispersion chromatique compris entre 50 et 400 nm pour cette même longueur d'onde.

Il est avantageux que la fibre de ligne utilisée en amont soit celle qui présente la surface effective la plus grande, dans la mesure où ceci permet de limiter les effets non-linéaires. Dans la fibre avale, la surface effective plus faible n'est pas pénalisante du fait de la diminution du niveau optique.

Le rapport des longueurs des fibres dans la combinaison peut varier, par rapport à l'exemple ci-dessus. Il est préférable que la longueur de la fibre de l'invention soit supérieure ou égale à celle de la fibre à pente non nulle. L'effet de cette limite est que le rapport C/C' de la fibre de compensation peut atteindre le double du rapport $C_2/C'_2$ de la fibre de l'état de la technique. Dans l'exemple d'une fibre NZ-DSF+, doubler le rapport $C_2/C'_2$ permet d'atteindre les valeurs des rapports C/C' habituels des fibres de compensation pour SMF, ce qui s'accompagne également par une augmentation de la surface effective de ces fibres de compensation. Dans ce cas, la fibre de compensation de dispersion peut être caractérisée par un rapport C/C' supérieur à 250 nm, et une surface effective supérieure à 18 $\mu m^2$ pour une longueur d'onde de 1550 nm. La limite supérieure du rapport C/C' est atteinte lorsque la fibre de ligne est entièrement composée de fibre de l'invention - comme évoqué plus haut.

Par ailleurs, la fibre selon l'invention permet d'utiliser dans un tel système de transmission des longueurs d'onde s'étendant sur une plage plus importante. Plus spécifiquement, les systèmes de transmission actuels fonctionnent le plus souvent en bande C, c'est-à-dire entre 1530 et 1565 nm; un système utilisant la fibre de l'invention peut fonctionner aussi à des longueurs d'onde plus importantes, et par exemple aussi en bande L et en bande U. On appelle bande L et bonde U les plages de longueurs d'onde qui s'étendent au-dessus de la bande C, jusqu'à des longueurs d'onde de l'ordre de 1620 ou 1625 nm pour la bande L et 1675nm pour la bande U. La fibre de l'invention permet de réaliser des systèmes de transmission en bandes C, L et U, voire uniquement en bande L, ou en bande U. La fibre peut aussi être utilisée dans la bande S, qui s'étend en dessous de la bande C, sur des longueurs d'onde comprises entre 1460 et 1530 nm.

Outre les caractéristiques mentionnées plus haut, il est avantageux que la fibre présente une ou plusieurs des caractéristiques suivantes :

- une surface effective supérieure ou égale à 40 $\mu m^2$ à une longueur d'onde de 1550 nm;
- une longueur d'onde $\lambda_0$ d'annulation de la dispersion chromatique inférieure ou égale à 1400 nm;
- un diamètre de mode $2W_{02}$ supérieur ou égal à 6,4 $\mu m$ à une longueur d'onde de 1550 nm;
- des pertes par courbures mesurées par enroulement de la fibre autour d'un manchon de rayon 10 mm inférieures à 100 dB/m à une longueur d'onde de 1550 nm;
- des pertes par courbures mesurées par enroulement de la fibre autour d'un manchon de rayon 10 mm inférieures à 400 dB/m à une longueur d'onde de 1625 nm, voire à une longueur d'onde de 1675 nm;
- à une longueur d'onde de 1550 nm, des pertes par courbure mesurées pour 100 tours de fibre autour d'un manchon de rayon de 30 mm inférieures à $10^{-2}$ dB ;
- à une longueur d'onde de 1625 nm, des pertes par courbure mesurées pour 100 tours de fibre autour d'un manchon de rayon de 30 mm inférieures à 0,1 dB ;
- à une longueur d'onde de 1675 nm, des pertes par courbure mesurées pour 100 tours de fibre autour d'un manchon de rayon de 30 mm inférieures à 0,5 dB ;
- une sensibilité aux microcourbures inférieure ou égale à 1, et de préférence inférieure ou égale à 0,8 pour une longueur d'onde de 1550 nm;
- une atténuation inférieure ou égale à 0,24 dB/km à une longueur d'onde de 1550 nm ;
- une dispersion modale de polarisafiion inférieure ou égale à 0,2 ps/km$^{1/2}$, et de préférence inférieure ou égale à 0,1 ps/km$^{1/2}$, voire inférieure à 0,05 ps/km$^{1/2}$;

La borne proposée sur la surface effective assure que les effets non-linéaires restent supportables dans la fibre de ligne.

La borne sur la longueur d'onde d'annulation de la dispersion chromatique assure que la dispersion chromatique ne s'annule pas dans la plage de longueurs d'onde utilisée, et limite aussi les effets non-linéaires dans la plage de longueurs d'onde utilisée dans le système de transmission.

La borne sur les pertes par courbures et les pertes par microcourbures permettent notamment à la fibre de présenter un comportement satisfaisant lorsqu'elle est intégrée dans un câble. Ces bornes sont représentatives de la câblabilité de la fibre. On évalue la sensibilité aux courbures en mesurant l'atténuation linéique provoquée par l'enroulement de la fibre autour d'un manchon de 10 mm de rayon. La sensibilité aux microcourbures est mesurée de façon connue en soi ; on peut comme dans la suite la mesurer par rapport à une fibre telle que la fibre commercialisée par la demanderesse sous la référence ASMF 200. Ces contraintes sont de préférence respectées dans toute la plage de longueurs d'onde utilisée dans le système de transmission.

La borne sur l'atténuation limite les pertes dans la fibre.

La fibre présente en outre avantageusement une dispersion modale de polarisation inférieure ou égale à 0,2 ps/km$^{1/2}$, et de préférence inférieure ou égale à 0,1 ps/km$^{1/2}$, voire inférieure ou égale à 0,05 ps/km$^{1/2}$; cette valeur de la dispersion modale de polarisation assure une bonne transmission pour les hauts débits; elle est mesurée au voisinage d'une longueur d'onde de 1550 nm.

Les valeurs proposées sont mesurées au voisinage de 1550 nm. Du fait de la faible pente de dispersion chromatique, la dispersion chromatique ainsi que le diamètre de mode et la surface effective sont sensiblement idenfiques dans toute la plage de longueurs d'onde utilisée.

On donne maintenant des exemples de fibre vérifiiant ces différentes caractérisfiques, ayant comme profil un profil trapèze ou rectangle et anneau.

La fibre peut présenter le profil de la figure 2, avec les valeurs données dans le tableau ci-dessous. Le profil de la figure 2 est un profil d'indice de consigne du type en trapèze, avec une tranchée enterrée et un anneau. Il présente, en partant du centre de la fibre:

- une partie centrale avec un indice sensiblement constant supérieur ou égal à l'indice de la gaine;

- une partie avec un indice décroissant sensiblement linéairement depuis cette indice sensiblement constant supérieur ou égal à l'indice de la gaine jusqu'à un indice inférieur ou égal à l'indice de la gaine
- une partie annulaire présentant un indice sensiblement constant avec une valeur d'indice inférieur ou égal à l'indice de la gaine ;

l'ensemble constituant un profil d'indice dit "en trapèze avec une tranchée enterrée ou déprimée".

Autour de la tranchée enterrée, la fibre de la figure 2 présente un anneau, c'est-à-dire une partie d'indice supérieur à l'indice de la gaine, d'où le qualificatif de profil en trapèze avec une tranchée enterrée et un anneau.

On peut aussi prévoir un profil en rectangle avec une tranchée enterrée et un anneau; par rapport au profil en trapèze et anneau, la fibre présente alors

- une partie centrale avec un indice sensiblement constant supérieur ou égal à l'indice de la gaine;
- une partie annulaire présentant un indice sensiblement constant avec une valeur d'indice inférieur ou égal à l'indice de la gaine ;

l'ensemble constituant un profil d'indice dit "en rectangle avec une tranchée enterrée ou déprimée", et étant entouré d'un anneau.

On note dans la suite $\Delta n_1$ la différence entre l'indice de la partie centrale et l'indice de la gaine de la fibre, $\Delta n_2$ la différence entre l'indice de la tranchée enterrée et l'indice de la gaine de la fibre et $\Delta n_3$ la différence entre l'indice de l'anneau et l'indice de la gaine de la fibre. Comme expliqué plus haut, $\Delta n_1$ et $\Delta n_3$ ont une valeur positive, tandis que $\Delta n_2$ a une valeur négative.

On note $r_{1a}$. le rayon extérieur de la partie centrale d'indice sensiblement constant, $r_{1b}$ le rayon intérieur de la tranchée enterrée et $r_1$ le rayon de la partie centrale de la fibre présentant un indice supérieur à l'indice de la gaine; dans le cas d'un profil en rectangle, $r_1$ est le rayon de la partie centrale en rectangle. On peut aussi appeler "petite base du trapèze" la partie centrale de rayon $r_{1a}$ et d'indice constant supérieur à l'indice de la gaine. La "grande base du trapèze" correspond au rayon $r_{1b}$ sur la figure, et s'étend jusqu'au rayon intérieur de la tranchée enterrée.

Des exemples de fibres présentant ce profil sont donnés dans le tableau qui suit, avec les notations précisées ci-dessus.

Tableau 1

|   | $r_{1a}\,(\mu m)$ | $r_1\,(\mu m)$ | $r_{1b}\,(\mu m)$ | $r_2\,(\mu m)$ | $r_3\,(\mu m)$ | $10^3\Delta n_1$ | $10^3\Delta n_2$ | $10^3\Delta n_3$ |
|---|---|---|---|---|---|---|---|---|
| 1 | 3,37 | 3,41 | 3,44 | 6,09 | 9,73 | 7,7 | -4,5 | 3,0 |
| 2 | 3,28 | 3,28 | 3,28 | 6,82 | 8,93 | 8,0 | -4,5 | 5,1 |
| 3 | 2,51 | 3,38 | 4,19 | 5,86 | 8,65 | 8,5 | -7,9 | 3,5 |
| 4 | 3,28 | 3,28 | 3,28 | 7,10 | 9,25 | 8,1 | -4,9 | 4,6 |
| 5 | 3,16 | 3,46 | 3,63 | 7,09 | 10,23 | 7,5 | -4,2 | 3,1 |
| 6 | 3,28 | 3,28 | 3,28 | 6,73 | 8,74 | 8,0 | -7,0 | 5,7 |
| 7 | 2,87 | 3,36 | 3,81 | 6,08 | 8,87 | 8,8 | -8,0 | 3,8 |
| 8 | 3,14 | 3,14 | 3,14 | 7,00 | 8,90 | 7,6 | -7,0 | 5,4 |
| 9 | 2,93 | 3,20 | 3,43 | 6,68 | 9,63 | 9,0 | -7,6 | 3,2 |

Dans le tableau, les profils pairs sont des profils en rectangle, et les profils impairs des profils en trapèze. Du point de vue du profil, les dimensions de la fibre peuvent être choisies en appliquant l'une ou plusieurs des inégalités données ci-dessous; d'une part, en ce qui concerne la partie centrale en trapèze, on a avantageusement :

- $5,7.10^{-3} \le \Delta n_1 \le 9.10^{-3}$, et
- $2,8 \le r_1 \le 4,2\ \mu m$.

La pente des flancs du trapèze est avantageusement choisie de sorte que le rapport des rayons $r_{1a}$ et $r_{1b}$ soit compris entre 0,55 et 1; la valeur limite de 1 correspond en fait à un profil en "rectangle" avec anneau, comme les exemples pairs du tableau.

Pour la tranchée enterrée, on peut choisir les valeurs de différence d'indice $\Delta n_2$ et de rayon extérieur $r_2$ de sorte à vérifier :

- $-9.10^{-3} = \Delta n_2 = -2{,}5.10^{-3}$,
- $5{,}6 = r_2 = 7{,}9 \ \mu m$,

Pour l'anneau, on peut choisir les valeurs de différence d'indice $\Delta n_3$ et de rayon extérieur r, de sorte à vérifier :

- $1.10^{-3} = \Delta n_3 = 5{,}7.10^{-3}$,
- $7{,}8 = r_3 = 10{,}5 \ \mu m$,

D'autres caractérisations de la fibre sont possibles. Ainsi, on peut utiliser le paramètre $S_{01}$ défini par

$$S_{01} = \int_0^{r_1} \Delta n(r).dr$$

Ce paramètre est homogène au produit d'un rayon par un indice. Ce paramètre s'applique simplement au profil en trapèze comme au profil en rectangle, et est représentatif de l'augmentation d'indice au voisinage du coeur de la fibre. Il est de préférence supérieur à $23.10^{-3} \ \mu m$.

Le paramètre $S_1$ défini par

$$S_1 = 2.\int_0^{r_1} \Delta n(r).r.dr$$

est homogène au produit du carré d'un rayon par un indice. Ce paramètre s'applique simplement au profil en trapèze comme au profil en rectangle, et est représentatif de l'augmentation d'indice au voisinage du coeur de la fibre. Dans le cas d'un profil d'indice en rectangle, ce paramètre vaut $\Delta n_1.r_1^2$ ; il est de préférence compris entre $65.10^{-3}$ et $90.10^{-3} \ \mu m^2$.

Un autre paramètre possible est le paramètre $S_{11}$. qui s'écrit

$$S_{11} = 3.\int_0^{r_1} \Delta n(r).r^2.dr$$

Ce paramètre homogène au produit d'un rayon à la puissance trois par un indice. Physiquement, ce paramètre est représentatif de la correspondance entre un profil en rectangle et un profil en trapèze, dans la théorie des fibres équivalentes; il est de préférence compris entre $180.10^{-3}$ et $305.10^{-3} \ \mu m^3$.

On peut encore utiliser le paramètre $S_{02}$, défini par

$$S_{02} = \int_{r_1}^{r_2} \Delta n(r).dr$$

Ce paramètre est encore homogène au produit d'un rayon par un indice. Ce paramètre est représentatif de la diminution d'indice dans la tranchée enterrée. Selon l'invention, il est compris entre $-27.10^{-3}$ et $-12.10^{-3} \ \mu m$.

De même, le paramètre $S_{03}$ défini par

$$S_{03} = \int_{r_2}^{r_3} \Delta n(r).dr$$

est homogène ou produit d'un rayon par un indice et est représentatif de l'augmentation d'indice dans l'anneau. Il est de préférence compris entre $4.10^{-3}$ et $12.10^{-3} \ \mu m$.

Le paramètre $S_{02}$, ou la combinaison de $S_{02}$ et plusieurs de ces paramètres permet de définir le profil de la fibre de l'invention.

Les fibres du tableau 1 présentent les caractéristiques de propagation indiquées dans le tableau 2.

Tableau 2

|  | $\lambda_{dh}$ nm | $\lambda_0$ nm | $2W_{02}$ $\mu$m (1550nm) | C' ps/nm$^2$-km (1550nm) | $S_{off} \times$ C/C' $\mu$m$^2$-nm (1550nm) | $S_{\mu c}$ (1550nm) |
|---|---|---|---|---|---|---|
| 1 | 1820 | 1385 | 7,72 | 0,0130 | 13580 | <0,5 |
| 2 | 1795 | 1350 | 7,34 | 0,0041 | 51390 | <0,6 |
| 3 | 1695 | 1360 | 7,03 | -0,0063 | -18710 | <0,6 |
| 4 | 1785 | 1315 | 7,42 | 0,0110 | 32360 | <0,5 |
| 5 | 1840 | 1325 | 7,50 | 0,0095 | 36230 | <0,8 |
| 6 | 1795 | 1295 | 7,00 | 0,0006 | 585200 | <0,5 |
| 7 | 1785 | 1305 | 6,76 | -0,0004 | -730750 | <0,5 |
| 8 | 1795 | 1280 | 7,14 | 0,0134 | 37560 | <0,5 |
| 9 | 1805 | 1285 | 6,45 | 0,0097 | 40530 | <0,5 |

Tableau 3

| | $S_{off}$ μm² (1460nm) | $S_{off}$ μm² (1550nm) | $S_{off}$ μm² (1625nm) | $S_{off}$ μm² (1675nm) | C ps/nm-km (1460nm) | C ps/nm-km (1550nm) | C ps/nm-km (1625nm) | C ps/nm-km (1675nm) | PC10mm dB/m (1550nm) | PC10mm dB/m (1625nm) | PC10mm dB/m (1675nm) | PC30mm dB (1550nm) | PC30mm dB (1625nm) | PC30mm dB (1675nm) |
|---|---|---|---|---|---|---|---|---|---|---|---|---|---|---|
| 1 | 42,1 | 47,7 | 54,2 | 59,8 | 2,2 | 3,7 | 4,7 | 5,5 | <10 | <50 | <150 | $<10^{-5}$ | $<10^{-3}$ | $<10^{-3}$ |
| 2 | 38,5 | 43 | 48,3 | 52,9 | 3,8 | 4,9 | 4,9 | 4,7 | <10 | <100 | <200 | $<10^{-5}$ | $<5.10^{-3}$ | $<10^{-2}$ |
| 3 | 35,1 | 39,3 | 44,3 | 48,7 | 2,7 | 3 | 2,1 | 1,3 | <20 | <100 | <250 | $<10^{-4}$ | $<10^{-2}$ | $<10^{-1}$ |
| 4 | 36,6 | 40 | 43,8 | 47,1 | 7 | 8,9 | 9,1 | 8,7 | <10 | <50 | <150 | $<5.10^{-5}$ | $<10^{-2}$ | $<5.10^{-2}$ |
| 5 | 40,4 | 44,7 | 49,6 | 54 | 6 | 7,7 | 7,9 | 7,6 | <20 | <100 | <250 | $<10^{-4}$ | $<10^{-2}$ | $<10^{-1}$ |
| 6 | 36,6 | 39,9 | 43,9 | 47,3 | 7,7 | 8,8 | 8,1 | 7,0 | <10 | <50 | <200 | $<10^{-5}$ | $<5.10^{-3}$ | $<10^{-2}$ |
| 7 | 33,9 | 37 | 40,5 | 43,6 | 6,9 | 7,9 | 7,2 | 6,1 | <10 | <50 | <100 | $<10^{-5}$ | $<5.10^{-3}$ | $<10^{-3}$ |
| 8 | 38,6 | 41,6 | 45 | 47,9 | 10 | 12,1 | 12,4 | 12 | <10 | <50 | < 150 | $<10^{-5}$ | $<5.10^{-3}$ | $<10^{-2}$ |
| 9 | 31,3 | 33,6 | 36,1 | 38,2 | 9,8 | 11,7 | 11,5 | 10,2 | <10 | <50 | <100 | $<10^{-5}$ | $<10^{-3}$ | $<5.10^{-2}$ |

Dans ces tableaux, $\lambda_{dh}$, est la longueur d'onde de coupure théorique de la fibre, exprimée en nanomètres ; dans la pratique, la longueur d'onde de coupure mesurée sur câble est inférieure de plusieurs centaines de nm ; on comprend que la fibre est effectivement monomode dans la plage de longueurs d'onde des signaux utiles, notamment dans les bandes S et C. $2W_{02}$ est le diamètre de mode, en micromètres; $S_{off}$ est l'aire effective, en micromètres carrés. $\lambda_0$ est en nm la longueur d'onde pour laquelle la dispersion chromatique s'annule. C est la dispersion chromatique exprimée en ps/(nm.km). C est la pente de dispersion chromatique, c'est-à-dire la dérivée de la dispersion chromatique par rapport à la longueur d'onde, exprimée en ps/(nm$^2$.km); ces divers paramètres sont mesurés à 1550 nm. PC10mm représente les pertes linéiques par courbures, mesurées pour un manchon de 10 mm de rayon et est exprimé en dB/m, et PC30mm représente les pertes par courbures pour 100 tours de fibres autour d'un manchon de 30 mm de rayon et est exprimé en dB. Enfin, $S_{\mu c}$ est un coefficient sans dimension, représentatif de la sensibilité de la fibre aux microcourbures; ce coefficient est dans le tableau mesuré à 1550 nm par rapport à une fibre de l'état de la technique commercialisée par la demanderesse sous l'appellation ASMF 200. Ce coefficient peut être mesuré par la méthode d'écrasement de la fibre entre deux grilles, connue en soi.

Les tableaux 2 et 3 montrent que les fibres du tableau 1 présentent des caractéristiques de propagation - dispersion chromatique, pente de dispersion chromatique - permettant leur utilisation en tant que fibre de ligne dans un système de transmission à fibre optique. Dans tous les exemples du tableau 1, des variations de 5 % de l'indice $\Delta n_1$, ou de 10 % des indices $\Delta n_2$, $\Delta n_3$ permettent d'obtenir des résultats similaires. Il en est de même des rayons, qui peuvent varier de 10 % pour $r_1$ et $r_2$ et de 5 % pour $r_3$ par rapport aux valeurs données dans les exemples, tout en obtenant des résultats analogues.

Plus spécifiquement, les fibres des tableaux vérifient avantageusement l'une ou plusieurs des contraintes suivantes :

- une variation de dispersion chromatique entre 1460 et 1625 nm, par rapport à sa valeur à 1550 nm, inférieure ou égale en valeur absolue à 35 %, et de préférence inférieure ou égale à 25 %, voire inférieure ou égale à 20 % ;
- une variation de dispersion chromatique entre 1460 et 1675 nm, par rapport à sa valeur à 1550 nm, inférieure ou égale en valeur absolue à 40 %, et de préférence inférieure ou égale à 35 %, voire inférieure ou égale à 25 % ;
- une variation de dispersion chromatique entre 1460 et 1625 nm, par rapport à sa valeur à 1550 nm, inférieure ou égale en valeur absolue à 2 ps/(nm.km), et de préférence inférieure ou égale à 1 ps/(nm.km) ;
- une variation de dispersion chromatique entre 1460 et 1675 nm, par rapport à sa valeur à 1550 nm, inférieure ou égale en valeur absolue à 3 ps/(nm.km), et de préférence inférieure ou égale à 2 ps/(nm.km);
- à une longueur d'onde de 1550 nm, une dispersion chromatique C comprise entre 5 et 11 ps/(nm.km) ;
- à une longueur d'onde de 1550 nm, une pente de dispersion chromatique C' inférieure ou égale en valeur absolue à 0,012 ps/(nm$^2$.km), et de préférence inférieure à 0,010 ps/(nm$^2$.km) ;
- à une longueur d'onde de 1550 nm, un produit entre la surface effective et le rapport entre la dispersion chromatique et la pente de la dispersion chromatique supérieure en valeur absolue à 12000 $\mu$m$^2$.nm.

Ces différents paramètres ont les effets suivants : les variations de la dispersion chromatique par rapport à la valeur à 1550 nm permettent une utilisation large bande de la fibre. La plage de dispersion chromatique correspond à un optimum pour l'utilisation de la fibre dans les systèmes de transmission. Les avantages de la limitation sur la pente de dispersion chromatique sont décrits plus haut. Le produit $S_{eff}$.C/C entre la surface effective et le rapport entre la dispersion chromatique et la pente de la dispersion chromatique est un compromis; le rapport $S_{eff}$/C' de la surface effective à la pente de dispersion chromatique doit être aussi grand que possible - la surface effective étant aussi grande que possible et la pente de dispersion chromatique aussi faible que possible. Pondérer ce rapport $S_{eff}$/C' en le multipliant par la dispersion chromatique permet de prendre en compte qu'il est plus facile de faire augmenter le rapport $S_{eff}$/C' pour de faibles valeurs de C, mais que de faibles valeurs de C peuvent être désavantageuses.

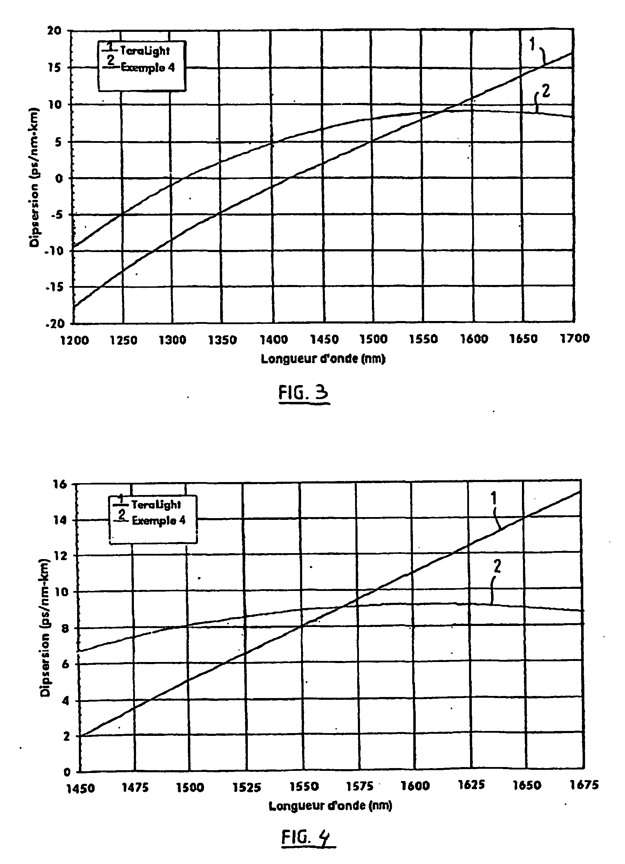

Les figures 3 et 4 montrent, à différentes échelles un graphe de la dispersion chromatique en fonction de la longueur d'onde pour des fibres connues et des fibres selon l'invention; est portée en abscisse la longueur d'onde en $\mu$m, et en ordonnée la dispersion chromatique en ps/(nm.km). Chaque graphe montre les valeurs de dispersion chromatique pour :

- la fibre décrite dons FR-A2 790 107 et commercialisée sous la référence TeraLight, courbe n°1;
- la fibre présentant le profil 4 du tableau 1 ci-dessus, courbe n°2.

Le graphe de la figure 4 montre les valeurs de dispersion chromatique pour les longueurs d'onde de 1200 à 1700 nm. Le graphe de la figure 5 ne montre les valeurs de dispersion chromatique pour les longueurs d'onde de 1450 à 1675 nm, c'est-à-dire dans une plage d'utilisation de la fibre de l'invention. Ces graphes montrent que les fibres des tableaux présentent dans la zone utile une dispersion chromatique bien plus plate que les fibres précédentes. La variation de la dispersion chromatique par rapport à sa valeur à 1550 nm pour la fibre 4 entre 1460 et 1675 nm est au maximum de -21 % et +2 %. A titre de comparaison, la variation correspondante pour la fibre TeraLight est de -66 % à +90 %. On notera en revanche que toutes ces fibres présentent une dispersion chromatique voisine à 1550 nm.

Un système de transmission avec de la fibre de l'invention peut donc présenter une plage d'utilisation entre des longueurs d'onde de 1460 et 1625 nm, de préférence entre des longueurs d'onde de 1460 et 1675 nm, voire entre des longueurs d'onde de 1300 et 1700 nm.

Bien entendu, la présente invention n'est pas limitée aux exemples et modes de réalisation décrits et représentés, mais elle est susceptible de nombreuses variantes accessibles à l'homme de l'art. Ainsi, on pourrait utiliser d'autres profils que ceux proposés dans les exemples de la figure 2, ou d'autres configurations de systèmes que celle de la figure 1.

## Revendications

1. Une fibre optique monomode en câble, dans une plage de longueurs d'onde de 1300 à 1700 nm, présentant pour une longueur d'onde de 1550 nm, une dispersion chromatique C comprise entre 3 et 14 ps/(nm.km), présentant uniquement successivement du centre de la fibre vers la périphérie un profile d'indice en trapèze ou rectangle avec une tranchée enterrée et un anneau puis une gaine d'indice constant,
la différence ($\Delta n_1$) entre l'indice maximum du trapèze ou du rectangle et l'indice de la gaine étant comprise entre $5,7.10^{-3}$ et $9.10^{-3}$ et le rayon ($r_1$) de la partie de la fibre présentant un indice supérieur à l'indice de la gaine étant compris entre 2,8 et 4,2 $\mu$m,
la différence ($\Delta n_2$) entre l'indice de la tranchée enterrée et l'indice de la gaine étant comprise entre $-9.10^{-3}$ et $-2.5.10^{-3}$ et le rayon extérieur ($r_2$) de la tranchée enterrée étant comprise entre 5,6 et 7,9 $\mu$m,
la différence ($\Delta n_3$) entre l'indice de l'anneau et indice de la gaine étant comprise entre $1.10^{-3}$ et $5,7.10^{-3}$ et le rayon extérieur ($r_3$) de l'anneau étant compris entre 7,8 et 10,5 $\mu$m,
la valeur de l'intégrale de la différence ($\Delta n_2$) entre l'indice de la tranchée enterrée et l'indice de la gaine entre le rayon ($r_1$) extérieur de la partie de la fibre présentant un indice supérieur à l'indice de la gaine et le rayon extérieur ($r_2$) de la tranchée enterrée étant comprise entre $-27.10^{-3}$ et $-12.10^{-3}$ $\mu$m, et les rayons ($r_1$; $r_2$; $r_3$) et les différences ($\Delta n_3$; $\Delta n_2$; $\Delta n_3$) entre les indices de la partie de la fibre présentant un indice supérieur à l'indice de la gaine, de la tranchée enterrée et de l'anneau au rapport de l'indice de la gaine tels que la fibre optique monomode en câble présente, pour une longueur d'onde de 1550 nm, une pente de dispersion chromatique C' inférieure en valeur absolue à 0,014 ps/(nm$^1$.km) et une surface effective supérieure ou égale à 35 $\mu$m$^2$, et, pour une longueur d'onde de 1625 nm, des pertes par courbures mesurées pour un rayon de 10 mm inférieures à 400 dB/m

2. La fibre optique monomode en câble de la revendication 1, dans laquelle le rapport entre le rayon intérieur ($r_{1a}$) et le rayon extérieur ($r_{1b}$) de la partie annulaire du trapèze présentant un indice décroissant est compris entre 0.55 et 1.

3. La fibre optique monomode en câble de la revendication 1 ou 2, dans laquelle la valeur de l'intégrale de la différence ($\Delta n_1$) de l'indice de la partie de la fibre optique présentant un indice supérieur à l'indice de la gaine et l'indice de la gaine entre un rayon nul et le rayon ($r_1$) extérieur de la partie de la fibre optique présentant un indice supérieur à l'indice de la gaine est supérieur à $23.10^{-3}$ $\mu$m.

4. La fibre optique monomode en câble de l'une des revendications 1 à 3, dans laquelle la valeur du double de l'intégrale du produit de la différence ($\Delta n_1$) entre l'indice de la partie de la fibre présentant un indice supérieur à l'indice de la gaine et l'indice de la gaine par le rayon, entre un rayon nul et le rayon ($r_1$) extérieur de la partie de la fibre optique présentant un indice supérieur à l'indice de la gaine, est comprise entre $65.10^{-3}$ et $90.10^{-3}$ $\mu$m$^2$.

5. La fibre optique monomode en câble de l'une des revendications 1 à 4, dans laquelle la valeur du triple de l'intégrale du produit de la différence ($\Delta n_1$) entre l'indice de la partie de la fibre otique présentant un indice supérieur à l'indice de la gaine et l'indice de la gaine par le carré du rayon, entre un rayon nul et le rayon ($r_1$) de la partie de la fibre optique présentant un indice supérieur à l'indice de la gaine est comprise entre $180.10^{-3}$ et $305.10^{-3}$ $\mu$m$^3$.

6. La fibre optique monomode en câble de l'une des revendications 1 à 5, dans laquelle la valeur de l'intégrale de la différence ($\Delta n_3$) entre l'indice de l'anneau et l'indice de la gaine entre le rayon ($r_2$) extérieur de la tranchée enterrée et le rayon ($r_3$) extérieur de l'anneau, est comprise entre $4.10^{-3}$ et $12.10^{-3}$ $\mu$m.

7. La fibre optique monomode de la revendication 1, présentant à une longueur d'onde de 1550 nm une surface effective supérieure ou égale à 40 $\mu$m$^2$.

**8.** La fibre optique monomode de l'une des revendications 1 à 7, présentant une longueur d'onde $\lambda_0$ d'annulation de la dispersion chromatique inférieure ou égale à 1400 nm.

**9.** La fibre optique monomode de l'une des revendications 1 à 8, présentant à une longueur d'onde de 1550 nm un diamètre de mode 2 $W_{02}$ supérieur ou égal à 6,4 $\mu$m.

**10.** La fibre optique monomode de l'une des revendications 1 à 9, présentant à une longueur d'onde de 1550 nm des pertes par courbure mesurées pour un rayon de 10 mm inférieures à 100 dB/m.

**11.** La fibre optique monomode en câble de l'une des revendications 1 à 9, présentant à une longueur d'onde de 1675 nm, des pertes par courbure mesurées pour un rayon de 10 mm inférieures à 400 dB/m.

**12.** La fibre optique monomode en câble de l'une des revendications 1 à 11, présentant à une longueur d'onde de 1550 nm des pertes par courbure mesurées pour 100 tours de fibre autour d'un manchon de 30 mm inférieures à $10^{-2}$ dB.

**13.** La fibre optique monomode en câble de l'une des revendications 1 à 12, présentant à une longueur d'onde de 1625 nm, des pertes par courbure mesurées pour 100 tours de fibre autour d'un manchon de rayon de 30 mm inférieures à 0,1 dB.

**14.** La fibre optique monomode en câble de l'une des revendications 1 à 13, présentant à une longueur d'onde de 1675 nm, des pertes par courbure mesurées pour 100 tours de fibre autour d'un manchon de rayon de 30 mm inférieures à 0.5 dB.

**15.** La fibre optique monomode en câble de l'une des revendications 1 à 14, présentant une longueur d'onde de coupure théorique inférieure ou égale à 1850 nm.

**16.** La fibre optique monomode de câble de la revendication 15, présentant la longueur d'onde de coupure théorique étant inférieure ou égale à 1800 nm.

**17.** La fibre optique monomode de l'une des revendications 1 à 16, présentant une variation de dispersion chromatique entre 1460 nm et 1625 nm, par rapport à sa valeur à 1550 nm, inférieure ou égale en valeur absolue à 35 %.

**18.** La fibre optique monomode en câble de la revendication 17, présentant une variation de dispersion chromatique entre 1460 nm et 1625 nm, par rapport à sa valeur à 1550 nm, inférieure ou égale en valeur absolue à 25 %.

**19.** La fibre optique monomode en câble de la revendication 18, présentant une variation de dispersion chromatique entre 1460 nm et 1625 nm, par rapport à sa valeur à 1550 nm, inférieure ou égale en valeur absolue à 20 %.

**20.** La fibre optique monomode en câble de la revendication 19, présentant une variation de dispersion chromatique entre 1460 nm et 1675 nm, par rapport à sa valeur à 1550 nm, inférieure ou égale en valeur absolue à 40 %.

**21.** La fibre optique monomode en câble de la revendication 20, présentant une variation de dispersion chromatique entre 1460 nm et 1675 nm, par rapport à sa valeur à 1550 nm, inférieure ou égale en valeur absolue à 35 %.

**22.** La fibre optique monomode câble de la revendication 19, présentant une variation de dispersion chromatique entre 1460 nm et 1675 nm, par rapport à sa valeur à 1550 nm, inférieure ou égale en valeur absolue à 25 %.

**23.** La fibre optique monomode en câble de l'une des revendications 1 à 22, présentant une variation de dispersion chromatique entre 1460 nm et 1625 nm, par rapport à sa valeur à 1550 nm, inférieure ou égale en valeur absolue à 2 ps/(nm.km).

**24.** La fibre optique monomode en câble de la revendication 23, présentant une variation de dispersion chromatique entre 1460 nm et 1625 nm, par rapport à sa valeur à 1550 nm, inférieure ou égale en valeur absolue à 1 ps/(nm.km).

**25.** La fibre optique monomode en câble de l'une des revendications 1 à 24, présentant une variation de dispersion chromatique entre 1460 nm et 1675 nm, par rapport à sa valeur à 1550 nm, inférieure ou égale en valeur absolue à 3 ps/(nm.km).

**26.** La fibre optique monomode en câble de la revendication 25, présentant une variation de dispersion chromatique entre 1460 nm et 1675 nm, par rapport à sa valeur à 1550 nm, inférieure ou égale en valeur absolue à 2 ps/(nm.km).

**27.** La fibre optique monomode en câble de l'une des revendications 1 à 26, présentant à une longueur d'onde de 1550 nm, une dispersion chromatique C étant comprise entre 5 et 11 ps/(nm.km).

**28.** La fibre optique monomode en câble de l'une des revendications 1 à 27, présentant à une longueur d'onde de 1550 nm, une pente de dispersion chromatique C' inférieure ou égale en valeur absolue à 0,012 ps/(nm$^2$.km).

**29.** La fibre optique monomode en câble de la revendication 28, présentant à une longueur d'onde de 1550 nm, une pente de dispersion chromatique C' inférieure en valeur absolue à 0.010 ps/(nm$^2$.km).

**30.** La fibre optique monomode en câble de l'une des revendications 1 à 29, présentant à une longueur d'onde de 1550 nm, un produit entre la surface effective et le rapport entre la dispersion chromatique et la pente de dispersion chromatique supérieure en valeur absolue à 12000 $\mu$m$^2$.nm.

**31.** La fibre optique monomode en câble de l'une des revendications 1 à 30, présentant à une longueur d'onde de 1550 nm une sensibilité aux microcourbure inférieure ou égale à 1.

**32.** La fibre optique monomode en câble de la revendication 31, présentant à une longueur d'onde de 1550 nm une sensibilité aux microcourbure inférieure ou égale à 0,8.

**33.** La fibre optique monomode en câble de l'une des revendications 1 à 32, présentant à une longueur d'onde de 1550 nm une atténuation inférieure ou égale à 0,24 dB/km.

**34.** La fibre optique monomode en câble de l'une des revendications 1 à 33, présentant à une longueur d'onde de 1550 nm une dispersion modale de polarisation inférieure ou égale à 0.2 ps/km$^{1/2}$.

**35.** La fibre optique monomode en câble de la revendication 34, pressentant à une longueur d'onde de 1550 nm une dispersion modale de polarisation inférieure ou égale à 0,05 ps/km$^{1/2}$.

**36.** Un système de transmission à multiplexoge en longueurs d'onde, comprenant comme fibre de ligne la fibre selon l'une des revendications 1 à 35.

**37.** Le système de transmission de la revendication 36, comportant en outre comme fibre de ligne une fibre présentant pour une longueur d'onde de 1550 nm une dispersion chromatique positive et non nulle et un rapport de la dispersion chromatique à la pente de dispersion chromatique compris entre 50 et 400 nm.

**38.** Le système de la revendication 37, dans lequel la longueur de la fibre selon l'une des revendications 1 à 35 est supérieure ou égale à la longueur de la fibre présentant un rapport de la dispersion chromatique à la pente de dispersion chromatique entre 50 et 400 nm.

**39.** Le système de la revendication 37 ou 38, comprenant en outre une fibre de compensation de dispersion, présentant pour une longueur d'onde de 1550 nm un rapport de la dispersion chromatique à la pente de dispersion chromatique supérieur ou égal à 250 nm.

**40.** Le système de transmission de l'une des revendications 36 à 39, présentant une plage d'utilisation comprise entre les longueurs d'onde 1460 et 1625 nm, et de préférence entre les longueurs d'onde 1460 et 1675 nm, voire entre les longueurs d'onde 1300 et 1700 nm.

**Patentansprüche**

**1.** Einmodenglasfaser in einem Kabel in einem Wellenlängenbereich von 1300 bis 1700 nm, die bei einer Wellenlänge von 1550 nm eine chromatische Dispersion C zwischen 3 und 14 ps/(nm.km) aufweist, die nur aufeinanderfolgend vom Mittelpunkt der Faser zum Rand hin ein trapez- oder rechteckförmiges Indexprofil mit einem abgesenkten Abschnitt und einen Ring und einen Mantel mit konstantem Index aufweist,
wobei die Differenz ($\Delta n_1$) zwischen dem maximalen Index des Trapezes oder Rechtecks und dem Index des Mantels zwischen $5{,}7{.}10^{-3}$ und $9{.}10^{-3}$ liegt und der Radius ($r_1$) desjenigen Teils der Faser, welcher einen größeren Index als der Index des Mantels aufweist, zwischen 2,8 und 4,2 $\mu$m beträgt,

wobei die Differenz ($\Delta n_2$) zwischen dem Index des abgesenkten Abschnitts und dem Index des Mantels zwischen $-9{.}10^{-3}$ und $-2{,}5{.}10^{-3}$ liegt und der Außenradius ($r_2$) des abgesenkten Abschnitts zwischen 5,6 und 7,9 $\mu$m beträgt,

wobei die Differenz ($\Delta n_3$) zwischen dem Index des Rings und dem Index des Mantels zwischen $1{.}10^{-3}$ und $5{,}7{.}10^{-3}$ liegt und der Außenradius ($r_3$) des Rings zwischen 7,8 und 10,5 $\mu$m beträgt,

wobei der Wert des Integrals der Differenz ($\Delta n_2$) zwischen dem Index des abgesenkten Abschnitts und dem Index des Mantels zwischen dem Außenradius ($r_1$) desjenigen Teils der Faser, welcher einen größeren Index als der Index des Mantels aufweist, und dem Außenradius ($r_2$) des abgesenkten Abschnitts zwischen $-27{.}10^{-3}$ und $-12{.}10^{-3}$ $\mu$m liegt, und die Radien ($r_1$; $r_2$; $r_3$) und die Differenzen ($\Delta n_1$; $\Delta n_2$; $\Delta n_3$) zwischen den Indizes desjenigen Teils der Faser, welcher einen größeren Index als der Index des Mantels aufweist, des abgesenkten Abschnitts und des Rings im Verhältnis zum Index des Mantels derart sind, dass die Einmodenglasfaser in einem Kabel bei einer Wellenlänge von 1550 nm eine Steigung der chromatischen Dispersion C' mit einem Absolutbetrag unter 0,014 ps/(nm$^2$.km) sowie eine effektive Fläche größer oder gleich 35 $\mu$m$^2$ und bei einer Wellenlänge von 1625 nm bei einem Radius von 10 mm gemessene Krümmungsverluste von unter 400 dB/m aufweist.

2. Einmodenglasfaser in einem Kabel nach Anspruch 1, wobei das Verhältnis zwischen Innenradius ($r_1a$) und Außenradius ($r_1b$) des ringförmigen Teils des Trapezes mit abnehmendem Index zwischen 0,55 und 1 beträgt.

3. Einmodenglasfaser in einem Kabel nach Anspruch 1 oder 2, wobei der Wert des Integrals der Differenz ($\Delta n_1$) des Index desjenigen Teils der Faser, welcher einen größeren Index als der Index des Mantels aufweist, und dem Index des Mantels zwischen einem Radius von null und dem Außenradius ($r_1$) desjenigen Teils der Faser, welcher einen größeren Index als der Index des Mantels aufweist, größer als $23{.}10^{-3}$ $\mu$m ist.

4. Einmodenglasfaser in einem Kabel nach einem der Ansprüche 1 bis 3, wobei der Wert des doppelten Integrals vom Produkt der Differenz ($\Delta n_1$) zwischen dem Index desjenigen Teils der Faser, welcher einen größeren Index als der Index des Mantels aufweist, und dem Index des Mantels mit dem Radius zwischen einem Radius von null und dem Außenradius ($r_1$) desjenigen Teils der Faser, welcher einen größeren Index als der Index des Mantels aufweist, zwischen $65{.}10^{-3}$ und $90{.}10^{-3}$ $\mu$m$^2$ liegt.

5. Einmodenglasfaser in einem Kabel nach einem der Ansprüche 1 bis 4, wobei der Wert des dreifachen Integrals vom Produkt der Differenz ($\Delta n_1$) zwischen dem Index desjenigen Teils der Faser, welcher einen größeren Index als der Index des Mantels aufweist, und dem Index des Mantels mit dem Quadrat des Radius zwischen einem Radius von null und dem Radius ($r_1$) desjenigen Teils der Faser, welcher einen größeren Index als der Index des Mantels aufweist, zwischen $180{.}10^{-3}$ und $305{.}10^{-3}$ $\mu$m$^2$ liegt.

6. Einmodenglasfaser in einem Kabel nach einem der Ansprüche 1 bis 5, wobei der Wert des Integrals der Differenz ($\Delta n_3$) zwischen dem Index des Rings und dem Index des Mantels zwischen dem Außenradius ($r_2$) des abgesenkten Abschnitts und dem Außenradius ($r_3$) des Rings zwischen $4{.}10^{-3}$ und $12{.}10^{-3}$ $\mu$m liegt.

7. Einmodenglasfaser nach Anspruch 1, wobei sie bei einer Wellenlänge von 1550 nm eine effektive Fläche größer oder gleich 40 $\mu$m$^2$ aufweist.

8. Einmodenglasfaser nach einem der Ansprüche 1 bis 7, wobei sie eine Kompensationswellenlänge $\lambda_G$ der chromatischen Dispersion kleiner oder gleich 1400 nm aufweist.

9. Einmodenglasfaser nach einem der Ansprüche 1 bis 8, wobei sie bei einer Wellenlänge von 1550 nm einen Modendurchmesser 2 $W_{02}$ größer oder gleich 6,4 $\mu$m aufweist.

10. Einmodenglasfaser nach einem der Ansprüche 1 bis 9, wobei sie bei einer Wellenlänge von 1550 nm bei einem Radius von 10 mm gemessene Krümmungsverluste von unter 100 dB/m aufweist.

11. Einmodenglasfaser in einem Kabel nach einem der Ansprüche 1 bis 9, wobei sie bei einer Wellenlänge von 1675 nm bei einem Radius von 10 mm gemessene Krümmungsverluste von unter 400 dB/m aufweist.

12. Einmodenglasfaser in einem Kabel nach einem der Ansprüche 1 bis 11, wobei sie bei einer Wellenlänge von 1550 nm Krümmungsverluste von unter $10^{-2}$ dB aufweist, die entlang 100 Wicklungen der Faser um eine Hülse von 30 mm gemessen wurden.

**13.** Einmodenglasfaser in einem Kabel nach einem der Ansprüche 1 bis 12, wobei sie bei einer Wellenlänge von 1625 nm Krümmungsverluste von unter 0,1 dB aufweist, die entlang 100 Wicklungen der Faser um eine Hülse mit einem Radius von 30 mm gemessen wurden.

**14.** Einmodenglasfaser in einem Kabel nach einem der Ansprüche 1 bis 13, wobei sie bei einer Wellenlänge von 1675 nm Krümmungsverluste von unter 0,5 dB aufweist, die entlang 100 Wicklungen der Faser um eine Hülse mit einem Radius von 30 mm gemessen wurden.

**15.** Einmodenglasfaser in einem Kabel nach einem der Ansprüche 1 bis 14, wobei sie eine theoretische Cut-Off-Wellenlänge kleiner oder gleich 1850 nm aufweist.

**16.** Einmodenglasfaser in einem Kabel nach Anspruch 15, wobei sie eine theoretische Cut-Off-Wellenlänge kleiner oder gleich 1800 nm aufweist.

**17.** Einmodenglasfaser in einem Kabel nach einem der Ansprüche 1 bis 16, wobei sie gegenüber ihrem Wert bei 1550 nm eine Schwankung der chromatischen Dispersion zwischen 1460 nm und 1625 nm aufweist, deren Absolutbetrag kleiner oder gleich 35 % ist.

**18.** Einmodenglasfaser in einem Kabel nach Anspruch 17, wobei sie gegenüber ihrem Wert bei 1550 nm eine Schwankung der chromatischen Dispersion zwischen 1460 nm und 1625 nm aufweist, deren Absolutbetrag kleiner oder gleich 25 % ist.

**19.** Einmodenglasfaser in einem Kabel nach Anspruch 18, wobei sie gegenüber ihrem Wert bei 1550 nm eine Schwankung der chromatischen Dispersion zwischen 1460 nm und 1625 nm aufweist, deren Absolutbetrag kleiner oder gleich 20 % ist.

**20.** Einmodenglasfaser in einem Kabel nach Anspruch 19, wobei sie gegenüber ihrem Wert bei 1550 nm eine Schwankung der chromatischen Dispersion zwischen 1460 nm und 1675 nm aufweist, deren Absolutbetrag kleiner oder gleich 40 % ist.

**21.** Einmodenglasfaser in einem Kabel nach Anspruch 20, wobei sie gegenüber ihrem Wert bei 1550 nm eine Schwankung der chromatischen Dispersion zwischen 1460 nm und 1675 nm aufweist, deren Absolutbetrag kleiner oder gleich 35 % ist.

**22.** Einmodenglasfaser in einem Kabel nach Anspruch 19, wobei sie gegenüber ihrem Wert bei 1550 nm eine Schwankung der chromatischen Dispersion zwischen 1460 nm und 1675 nm aufweist, deren Absolutbetrag kleiner oder gleich 25 % ist.

**23.** Einmodenglasfaser in einem Kabel nach einem der Ansprüche 1 bis 22, wobei sie gegenüber ihrem Wert bei 1550 nm eine Schwankung der chromatischen Dispersion zwischen 1460 nm und 1625 nm aufweist, deren Absolutbetrag kleiner oder gleich 2 ps/(nm.km) ist.

**24.** Einmodenglasfaser in einem Kabel nach Anspruch 23, wobei sie gegenüber ihrem Wert bei 1550 nm eine Schwankung der chromatischen Dispersion zwischen 1460 nm und 1625 nm aufweist, deren Absolutbetrag kleiner oder gleich 1 ps/(nm.km) ist.

**25.** Einmodenglasfaser in einem Kabel nach einem der Ansprüche 1 bis 24, wobei sie gegenüber ihrem Wert bei 1550 nm eine Schwankung der chromatischen Dispersion zwischen 1460 nm und 1675 nm aufweist, deren Absolutbetrag kleiner oder gleich 3 ps/(nm.km) ist.

**26.** Einmodenglasfaser in einem Kabel nach Anspruch 25, wobei sie gegenüber ihrem Wert bei 1550 nm eine Schwankung der chromatischen Dispersion zwischen 1460 nm und 1675 nm aufweist, deren Absolutbetrag kleiner oder gleich 2 ps/(nm.km) ist.

**27.** Einmodenglasfaser in einem Kabel nach einem der Ansprüche 1 bis 26, wobei sie bei einer Wellenlänge von 1550 nm eine chromatische Dispersion C zwischen 5 und 11 ps/(nm.km) aufweist.

**28.** Einmodenglasfaser in einem Kabel nach einem der Ansprüche 1 bis 27, wobei sie bei einer Wellenlänge von 1550 nm eine Steigung der chromatischen Dispersion C' aufweist, deren Absolutbetrag kleiner oder gleich 0,012 ps/$(nm^2.km)$ ist.

**29.** Einmodenglasfaser in einem Kabel nach Anspruch 28, wobei sie bei einer Wellenlänge von 1550 nm eine Steigung der chromatischen Dispersion C' aufweist, deren Absolutbetrag kleiner als 0,010 ps/$(nm^2.km)$ ist.

**30.** Einmodenglasfaser in einem Kabel nach einem der Ansprüche 1 bis 29, wobei sie bei einer Wellenlänge von 1550 nm ein Produkt mit Absolutbetrag größer als 12000 $\mu m^2.nm$ zwischen der effektiven Fläche und dem Verhältnis zwischen der chromatischen Dispersion und der Steigung der chromatischen Dispersion aufweist.

**31.** Einmodenglasfaser in einem Kabel nach einem der Ansprüche 1 bis 30, wobei sie bei einer Wellenlänge von 1550 nm eine Empfindlichkeit gegenüber Mikrokrümmungen kleiner oder gleich 1 aufweist.

**32.** Einmodenglasfaser in einem Kabel nach Anspruch 31, wobei sie bei einer Wellenlänge von 1550 nm eine Empfindlichkeit gegenüber Mikrokrümmungen kleiner oder gleich 0,8 aufweist.

**33.** Einmodenglasfaser in einem Kabel nach der Ansprüche 1 bis 32, wobei sie bei einer Wellenlänge von 1550 nm eine Dämpfung kleiner oder gleich 0,24 dB/km aufweist.

**34.** Einmodenglasfaser in einem Kabel nach der Ansprüche 1 bis 33, wobei sie bei einer Wellenlänge von 1550 nm eine Polarisationsmodendispersion kleiner oder gleich 0,2 ps/$km^{1/2}$ aufweist.

**35.** Einmodenglasfaser in einem Kabel nach Anspruch 34, wobei sie bei einer Wellenlänge von 1550 nm eine Polarisationsmodendispersion kleiner oder gleich 0,05 ps/$km^{1/2}$ aufweist.

**36.** Übertragungssystem mit Wellenlängenmultiplex-Technologie, wobei es als Leitungsfaser die Faser nach einem der Ansprüche 1 bis 35 aufweist.

**37.** Übertragungssystem nach Anspruch 36, wobei es ferner als Leitungsfaser eine Faser enthält, die bei einer Wellenlänge von 1550 nm eine positive chromatische Dispersion ungleich null und ein Verhältnis der chromatischen Dispersion zur Steigung der chromatischen Dispersion zwischen 50 und 400 nm aufweist.

**38.** Übertragungssystem nach Anspruch 37, wobei die Länge der Faser nach einem der Ansprüche 1 bis 35 größer oder gleich der Länge der Faser ist, die ein Verhältnis der chromatischen Dispersion zur Steigung der chromatischen Dispersion zwischen 50 und 400 nm aufweist.

**39.** Übertragungssystem nach Anspruch 37 oder 38, wobei es ferner eine Dispersionskompensationsfaser enthält, die bei einer Wellenlänge von 1550 nm ein Verhältnis der chromatischen Dispersion zur Steigung der chromatischen Dispersion größer oder gleich 250 nm aufweist.

**40.** Übertragungssystem nach einem der Ansprüche 36 bis 39, wobei es einen Anwendungsbereich aufweist, der zwischen den Wellenlängen 1460 und 1625 nm, vorzugsweise zwischen den Wellenlängen 1460 und 1675 nm bzw. zwischen den Wellenlängen 1300 und 1700 nm liegt.

**Claims**

**1.** An optical fibre monomode in-cable in a wavelength range from 1300 to 1700 nm and having at a wavelength of 1550 nm a chromatic dispersion C between 3 and 14 ps/(nm.km) having only, successively from the centre of the fibre to the periphery, a rectangular or trapezoidal index profile with a buried trench and a ring and then a cladding of constant index,
the difference ($\Delta n_1$) between the maximum index of the trapezium or the rectangle and the index of the cladding being between 5.7x$10^{-3}$ and 9x$10^{-3}$ and the radius ($r_1$) of the portion of the fibre having an index higher than the index of the cladding being between 2.8 and 4.2 $\mu m$,
the difference ($\Delta n_2$) between the index of the buried trench and the index of the cladding being between -9x$10^{-3}$ and -2.5x$10^{-3}$ and the outer radius ($r_2$) of the buried trench being between 5.6 and 7.9 $\mu m$,
the difference ($\Delta n_3$) between the index of the ring and the index of the cladding being between 1x$10^{-3}$ and 5.7x$10^{-3}$ and the outer radius ($r_3$) of the ring being between 7.8 and 10.5 $\mu m$,

the value of the integral of the difference ($\Delta n_2$) between the index of the buried trench and the index of the cladding between the outer radius ($r_1$) of the portion of the fibre having an index higher than the index of the cladding and the outer radius ($r_2$) of the buried trench being between -27x10$^{-3}$ and -12x10$^{-3}$ $\mu$m,

and the radii ($r_1$; $r_2$; $r_3$) and the differences ($\Delta n_1$; $\Delta n_2$; $\Delta n_3$) between the indices of the portion of the fibre having an index higher than the index of the cladding, the buried trench and the ring relative to the index of the cladding such that the optical fibre monomode in-cable has at a wavelength of 1550 nm an absolute value of the chromatic dispersion slope C' less than 0.014 ps/(nm$^2$.km) and an effective area greater than or equal to 35 $\mu$m$^2$ and at a wavelength of 1625 nm bending losses measured for a radius of 10 mm less than 400 dB/km.

2. A monomode in-cable optical fibre according to claim 1, wherein the ratio between the inner radius ($r_{1a}$) and the outer radius ($r_{1b}$) of the annular portion of the trapezium having a decreasing index is between 0.55 and 1.

3. A monomode in-cable optical fibre according to claim 1 or 2, wherein the value of the integral of the difference ($\Delta n_1$) between the index of the portion of the optical fibre having an index higher than the index of the cladding and the index of the cladding between a zero radius and the outer radius ($r_1$) of the portion of the optical fibre having an index higher than the index of the cladding is greater than 23x10$^{-3}$ $\mu$m.

4. A monomode in-cable optical fibre according to any one of claims 1 to 3, wherein the value of the double integral of the product of the radius and the difference ($\Delta n_1$) between the index of the portion of the fibre having an index higher than the index of the cladding and the index of the cladding between a zero radius and the outer radius ($r_1$) of the portion of the optical fibre having an index higher than the index of the cladding is between 65x10$^{-3}$ and 90x10$^{-3}$ $\mu$m$^2$.

5. A monomode in-cable optical fibre according to any one of claims 1 to 4, wherein the value of the triple integral of the product of the square of the radius and the difference ($\Delta n_1$) between the index of the portion of the optical fibre having an index higher than the index of the cladding and the index of the cladding between a zero radius and the radius ($r_1$) of the portion of the optical fibre having an index higher than the index of the cladding is between 180x10$^{-3}$ and 305x10$^{-3}$ $\mu$m$^3$.

6. A monomode in-cable optical fibre according to any one of claims 1 to 5, wherein the value of the integral of the difference ($\Delta n_3$) between the index of the ring and the index of the cladding between the outer radius ($r_2$) of the buried trench and the outer radius ($r_3$) of the ring is between 4x10$^{-3}$ and 12x10$^{-3}$ $\mu$m.

7. A monomode optical fibre according to claim 1, having at a wavelength of 1550 nm an effective area greater than or equal to 40 $\mu$m$^2$.

8. A monomode in-cable optical fibre according to any one of claims 1 to 7, having a chromatic dispersion cancellation wavelength $\lambda_C$ less than or equal to 1400 nm.

9. A monomode in-cable optical fibre according to any one of claims 1 to 8, having at a wavelength of 1550 nm a mode diameter $2W_{02}$ greater than or equal to 6.4 $\mu$m.

10. A monomode in-cable optical fibre according to any one of claims 1 to 9, having at a wavelength of 1550 nm bending losses measured for a radius of 10 mm less than 100 dB/m.

11. A monomode in-cable optical fibre according to any one of claims 1 to 9, having at a wavelength of 1675 nm bending losses measured for a radius of 10 mm less than 400 dB/m.

12. A monomode in-cable optical fibre according to any one of claims 1 to 11, having at a wavelength of 1550 nm bending losses measured for 100 turns of fibre around a 30 mm sleeve of less than 10$^{-2}$ dB.

13. A monomode in-cable optical fibre according to any one of claims 1 to 12, having at a wavelength of 1625 nm bending losses measured for 100 turns of fibre around a sleeve of 30 mm radius of less than 0.1 dB.

14. A monomode in-cable optical fibre according to any one of claims 1 to 13, having at a wavelength of 1675 nm bending losses measured for 100 turns of fibre around a sleeve of 30 mm radius of less than 0.5 dB.

15. A monomode in-cable optical fibre according to any one of claims 1 to 14, having a theoretical cut-off wavelength less than or equal to 1850 nm.

16. A monomode in-cable optical fibre according to claim 15 having a theoretical cut-off wavelength less than or equal to 1800 nm.

17. A monomode optical fibre according to any one of claims 1 to 16 having between 1460 nm and 1625 nm an absolute value of the variation in chromatic dispersion with respect to its value at 1550 nm less than or equal to 35%.

18. A monomode in-cable optical fibre according to claim 17, having between 1460 nm and 1625 nm an absolute value of the variation in chromatic dispersion with respect to its value at 1550 nm less than or equal to 25%.

19. A monomode in-cable optical fibre according to claim 18, having between 1460 nm and 1625 nm an absolute value of the variation in chromatic dispersion with respect to its value at 1550 nm less than or equal to 20%.

20. A monomode in-cable optical fibre according to claim 19, having between 1460 nm and 1675 nm an absolute value of the variation in chromatic dispersion with respect to its value at 1550 nm less than or equal to 40%.

21. A monomode in-cable optical fibre according to claim 20, having between 1460 nm and 1675 nm an absolute value of the variation in chromatic dispersion with respect to its value at 1550 nm less than or equal to 35%.

22. A monomode in-cable optical fibre according to claim 19, having between 1460 nm and 1675 nm an absolute value of the variation in chromatic dispersion with respect to its value at 1550 nm less than or equal to 25%.

23. A monomode in-cable optical fibre according to any one of claims 1 to 22, having between 1460 nm and 1625 nm an absolute value of the variation in chromatic dispersion with respect to its value at 1550 nm less than or equal to 2 ps/(nm.km).

24. A monomode in-cable optical fibre according to claim 23, having between 1460 nm and 1625 nm an absolute value of the variation in chromatic dispersion with respect to its value at 1550 nm less than or equal to 1 ps/(nm.km).

25. A monomode in-cable optical fibre according to any one of claims 1 to 24, having between 1460 nm and 1675 nm an absolute value of the variation in chromatic dispersion with respect to its value at 1550 nm less than or equal to 3 ps/(nm.km).

26. A monomode in-cable optical fibre according to claim 25, having between 1460 nm and 1675 nm an absolute value of the variation in chromatic dispersion with respect to its value at 1550 nm less than or equal to 2 ps/(nm.km).

27. A monomode in-cable optical fibre according to any one of claims 1 to 26, having at a wavelength of 1550 nm a chromatic dispersion C between 5 and 11 ps/(nm.km).

28. A monomode in-cable optical fibre according to any one of claims 1 to 27, having at a wavelength of 1550 nm an absolute value of the chromatic dispersion slope C' less than or equal to 0.012 ps/(nm$^2$.km).

29. A monomode in-cable optical fibre according to claim 28, having at a wavelength of 1550 nm an absolute value of the chromatic dispersion slope C' less than 0.010 ps/(nm$^2$.km).

30. A monomode in-cable optical fibre according to any one of claims 1 to 29, having at a wavelength of 1550 nm an absolute value of the product of the effective area and the ratio between the chromatic dispersion and the chromatic dispersion slope greater than 12000 $\mu$m$^2$.nm.

31. A monomode in-cable optical fibre according to any one of claims 1 to 30, having at a wavelength of 1550 nm a sensitivity to microbending less than or equal to 1.

32. A monomode in-cable optical fibre according to claim 31, having at a wavelength of 1550 nm a sensitivity to microbending less than or equal to 0.8.

33. A monomode in-cable optical fibre according to any one of claims 1 to 32, having at a wavelength of 1550 nm an attenuation less than or equal to 0.24 dB/km.

34. A monomode in-cable optical fibre according to any one of claims 1 to 33, having at a wavelength of 1550 nm a polarization mode dispersion less than or equal to 0.2 ps/km$^{1/2}$.

35. A monomode in-cable optical fibre according to claim 34, having at a wavelength of 1550 nm a polarization mode dispersion less than or equal to 0.05 ps/km$^{1/2}$.

36. A wavelength-multiplex transmission system comprising as line fibre the fibre according to any one of claims 1 to 35.

37. A transmission system according to claim 36, further comprising as line fibre a fibre having at a wavelength of 1550 nm a positive and non-zero chromatic dispersion and a ratio of chromatic dispersion to chromatic dispersion slope between 50 and 400 nm.

38. A transmission system according to claim 37, wherein the length of the fibre according to any one of claims 1 to 35 is greater than or equal to the length of the fibre having a ratio of chromatic dispersion to chromatic dispersion slope between 50 and 400 nm.

39. A transmission system according to claim 37 or 38, further comprising a dispersion compensating fibre having at a wavelength of 1550 nm a ratio of chromatic dispersion to chromatic dispersion slope greater than or equal to 250 nm.

40. A transmission system according to any one of claims 36 to 39, having a range of use between the wavelengths of 1460 and 1625 nm and preferably between the wavelengths of 1460 and 1675 nm and even between the wavelengths of 1300 and 1700 nm.

FIG.1

r (μm)

FIG.2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2790107 A
- EP 1030199 A
- FR 0002316
- EP 1128196 A
- EP 1018656 A
- EP 1081514 A
- FR 2795828 A